# EUROPÄISCHE PATENTANMELDUNG

(11) **EP 1 777 623 A2**
(43) Veröffentlichungstag der Anmeldung: **25.04.2007**
(21) Anmeldenummer: 06122399.6
(22) Anmeldetag: 17.10.2006
(51) Int. Cl.: G06F 11/10

(54) **Verfahren und Vorrichtung zum Überwachen der Gültigkeit von geschützten Befehlsworten in einer Datenverarbeitungseinheit**

(30) Priorität: 24.10.2005 DE 102005050769
(71) Anmelder: ROBERT BOSCH GMBH, 70442 Stuttgart (DE)
(72) Erfinder: Mueller, Bernd, 70839, Gerlingen (DE); Angerbauer, Ralf, 71701, Schwieberdingen (DE); Boehl, Eberhard, 72768, Reutlingen (DE); Kottke, Thomas, 71139, Ehningen (DE)

(57) **Zusammenfassung**

Verfahren und Vorrichtung zum Überwachen der Gültigkeit von geschützten Befehlsworten in einer Datenverarbeitungseinheit, bei dem die Befehlsworte an eine Befehls-Pipeline dieser Einheit übermittelt und einzelne Bestandteile der Befehlsworte zu deren Verarbeitung in der Pipeline abgespalten werden, dadurch gekennzeichnet, dass abgespaltene Teile eines Befehlsworts durch einen jeweiligen Code geschützt werden, der zum Überprüfen der Gültigkeit des gesamten Befehlsworts herangezogen wird.

## Beschreibung

Die Erfindung betrifft ein Verfahren und eine Vorrichtung zum Überwachen der Gültigkeit von geschützten Befehlsworten in einer Datenverarbeitungseinheit nach dem entsprechenden Oberbegriff der Ansprüche 1 und 7.

Prozessoren und Controller sind in der Regel nicht geschützt vor Fehlern, die bei der Dekodierung eines Befehls oder in der Bearbeitung der (Befehls)-Pipeline auftreten. Ein bereits bekanntes Verfahren schützt zwar prinzipiell vor Decoderfehlern, nicht aber vor Fehlern, die an den Eingangssignalen des Befehlsdecoders auftreten. Weiterhin unterscheidet diese Methode nicht zwischen Operations-Code und Adressierungs-Bits im Befehlsregister. Auch ist die Durchgängigkeit des Schutzes bei der Aufspaltung des Befehlsworts in die verschiedenen Teile der Pipeline nicht gewährleistet.

Es ist Aufgabe der vorliegenden Erfindung, die Verarbeitung des gesamten Befehlsworts auf einfache Art und Weise durchgängig zu schützen.

Diese Aufgabe wird durch ein gattungsgemäßes Verfahren gelöst, bei dem abgespaltene Teile eines Befehlsworts durch einen jeweiligen Code geschützt werden, der zum Überprüfen der Gültigkeit des gesamten Befehlsworts herangezogen wird.

Damit ist sichergestellt, dass kein Bit des Befehlsworts verfälscht wird, wenn die Pipeline z. B einen Befehl von einem Befehlsspeicher erhält, der von einem Adresszähler adressiert wird. Die einzelnen Bestandteile sind nach der Abspaltung ebenfalls geschützt, so dass auch kein Einzelfehler unentdeckt bleibt. Der Befehlscode wird insgesamt erst dann überprüft, nachdem Teile davon zur Verarbeitung abgetrennt und geschützt wurden.

Vorteilhafte Weiterbildungen der Vorrichtung sind in den Unteransprüchen 2 bis 6 angegeben.

Danach ist vorgesehen, dass die einzelnen, abgespaltenen Bestandteile eines Befehlsworts unabhängig voneinander kodiert werden, z. B die Adressierungs- und die Operations-Code-Bits. Damit entsteht weniger Kodierungsaufwand, da z. B bei allein geänderter Adressierung die Codebits des Operationscodes gleich bleiben.

Werden für die genannten Bestandteile zudem unterschiedliche Kodierungsmethoden verwendet, wird außerdem deren Abarbeitung durch die Pipeline unterstützt.

Bevorzugt werden weiterhin Standard-Kodierungsmethoden verwendet, welche das Bilden eines Paritäts-Codes, eines Modulo-Codes, eines Berger-Codes und/oder 1-aus-n-Codes umfassen.

Um ein Überprüfen des Befehlsworts in seiner Gesamtheit auch auf Basis von 1-aus-n-kodierten Bestandteilen zu ermöglichen, werden die Bits dieser Bestandteile dazu herangezogen.

Liegt beim Bilden des 1-aus-n-Codes keine gültige Registeradresse vor, wird das Signal 'No Select' erzeugt. Dadurch wird immer genau ein Signal gleich 1 erhalten, was eine Weiterverarbeitung ermöglicht.

Die Aufgabe wird auch durch eine Datenverarbeitungseinheit gelöst, bei der die abgespaltenen Bestandteile eines Befehlsworts durch einen jeweiligen Code ergänzt sind, durch den dieser Bestandteil geschützt ist, und der zum Überprüfen der Gültigkeit des gesamten Befehlsworts herangezogen wird. Damit ergeben sich die bereits vorstehend geschilderten, verfahrensgemäßen Vorteile.

Vorteilhafte Weiterbildungen der Datenverarbeitungseinheit sind im Unteranspruch 8 angegeben.

Danach ist vorgesehen, dass eine Leitungsführung der Bits von einzelnen, abgespaltenen Bestandteilen eines Befehlsworts so gestaltet ist, dass zeitlich vor dem Überprüfen des gesamten Befehlsworts ein Code-Generator angesprochen wird, und in der Weiterführung der Leitungen erst die Überprüfung des gesamten Befehlsworts erfolgt. Damit wird die Effizienz des Verfahrens erhöht.

Die Erfindung wird im folgenden anhand eines Ausführungsbeispiels näher erläutert. Gleiche oder gleichwirkende Teile sind mit gleichen Bezugsziffern versehen. Es zeigen:
- Figur 1: den typischen Aufbau eines Befehlsworts mit Parität;
- Figur 2: den typischen Aufbau einer (Befehls)-Pipeline eines Prozessors;
- Figur 3: eine erfindungsgemäße partielle Dekodierung mit Paritäts-Prüfung;
- Figur 4: eine erfindungsgemäße Übertragung der Adress-Parität;
- Figur 5: eine erfindungsgemäße Generierung des Registerauswahl-Signals, und
- Figur 6: eine erfindungsgemäße Paritäts-Prüfung beim Dekodieren der Registerauswahl.

Das Verfahren wird hier beispielhaft anhand eines Paritäts-Codes dargestellt.

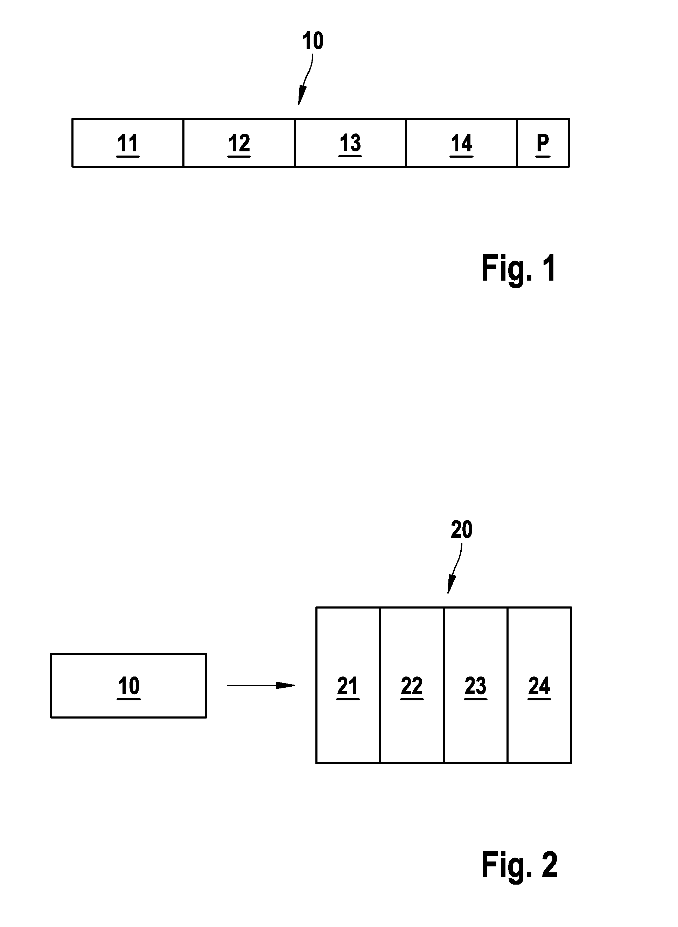

Die Figur 1 zeigt ein typisches Befehlswort 10, das sich aus den Bestandteilen Operations-Code 11, einer ersten Operations-Adresse 12, einer zweiten Operationsadresse 13, einer Zieladresse 14 und einem Paritäts-Bit P zusammensetzt.

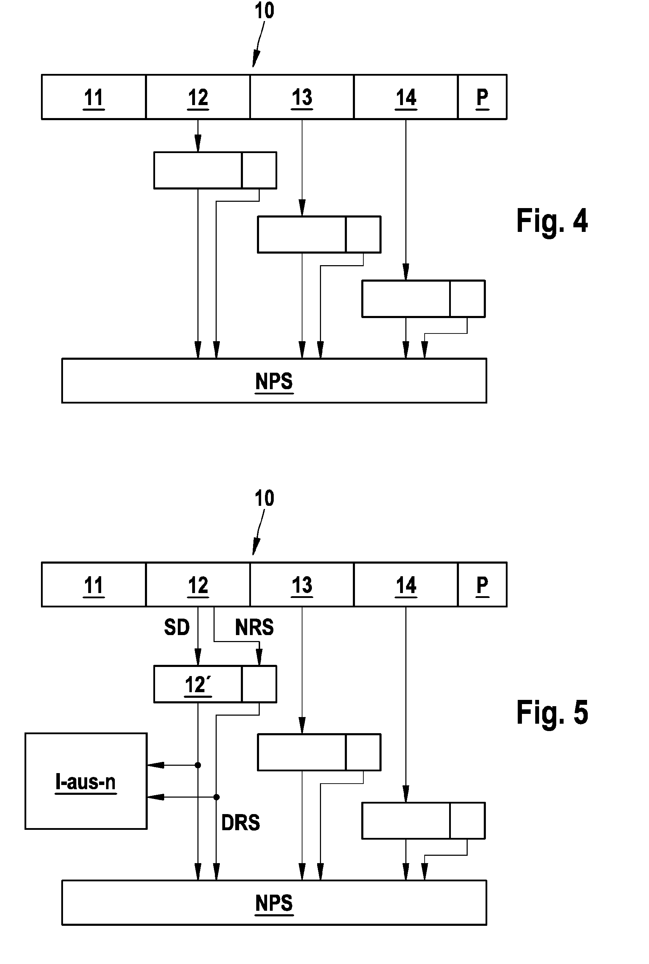

Die Figur 2 zeigt den typischen Aufbau einer Pipeline 20 eines Prozessors, in dessen Dekodierschritt 21 das Befehlswort 10 in seine Bestandteile zerlegt wird, da in verschiedenen Stufen der Pipeline 20 unterschiedliche Teile zur Wirkung kommen. Sofern nicht gleich die entsprechenden Steuersignale gebildet werden, sind die verbleibenden Teile des Befehlswortes 10 entweder unabhängig voneinander oder gemeinsam zu schützen, beispielsweise mit einem Paritäts-Bit. Die dekodierten Signale werden innerhalb der Pipeline 20 dann taktweise weitergeschoben, bis sie zur Ausführung in Stufe 23 kommen. Bei der Bildung der Adressen der Operanden in Stufe 22 und der Übertragung der Zieladresse in Stufe 24 ist es sinnvoll, die Adressen jeweils geschützt zu übertragen, z. B mit dem generierten Paritäts-Bit, sofern es sich um eine Speicheradresse handelt. Dies wird im Folgenden noch in Figur 4 gezeigt.

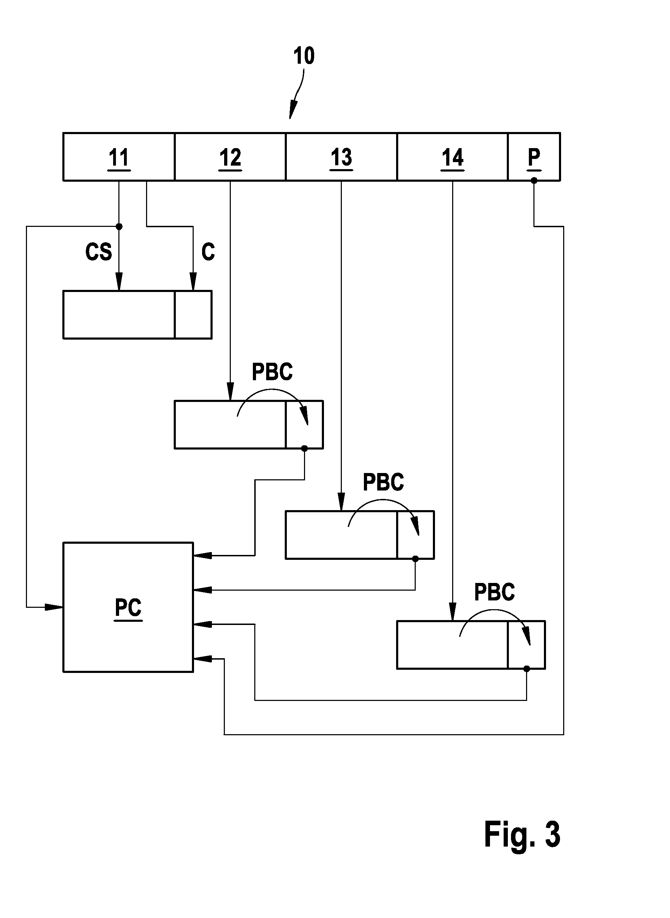

Die Figur 3 zeigt eine erfindungsgemäße partielle Dekodierung mit Paritäts-Prüfung PC (PARITY-CHECK). Dabei wird aus dem Operations-Code im Schritt CS ein Kontroll-Signal und im Schritt C ein zugehöriger Code generiert. Ein solcher Code kann dabei ein 1-aus-n-Code, ein Parity oder ECC (Error Correction Code), ein Berger-Code, ein Modulo-Code oder eine beliebige andere Bit-Kombination sein, die dem abgespaltenen Teil zugeordnet ist, und die zur Fehlererkennung benutzt werden kann. Das Befehlswort 10 wird insgesamt erst dann geprüft, nachdem Teile davon zur Befehlsabarbeitung abgetrennt wurden und unabhängig voneinander mit weiteren Kodierungsmaßnahmen wie z. B PBC (Parity- oder Berger-Code) geschützt wurden. Die Prüfung bezieht sich dabei nicht auf das ursprüngliche Befehlswort 10, sondern auf die abgespaltenen Teile. Damit ist sichergestellt, dass weder beim Eingang des ursprünglichen Befehlsworts 10 noch bei der Aufspaltung ein Fehler auftreten kann, der durch die Prüfung nicht entdeckt werden könnte.

Die Figur 4 zeigt alternativ oder ergänzend eine erfindungsgemäße Übertragung der Adress-Parität abgetrennter Bestandteile eines Befehlsworts 10 einschließlich Paritäts- oder Berger-Code via Adress-Bus in die nächste Pipeline-Stufe NPS (NEXT PIPELINE STAGE).

Die Figur 5 zeigt eine erfindungsgemäße Generierung des Registerauswahl-Signals 12' im Schritt SD (SELECT DECODER). Auch durch ein solches Auswahl- bzw. Schreib-Signal kann ein geeigneter Schutzmechanismus beim Ansprechen eines internen Registers im Schritt DRS (DIRECT REGISTER SELECT) gebildet werden. Da im letzteren Fall nur ein Register pro Operand oder Ziel ausgewählt werden kann, ist es möglich und erfindungsgemäß vorgesehen, dass überprüft wird, ob genau ein Register adressiert wird (1-aus-n-Code) oder kein Signal aktiv ist (gültige Registeradresse). Im letzteren Fall wird ein Signal NS (NO SELECT) generiert, das zu den Auswahl-Signalen ergänzt wird, um immer genau ein Signal gleich 1 zu haben. Der 1-aus-n-Code wird möglichst nahe am Verwendungsort geprüft. Das ist möglich, wenn die betreffenden Register nicht räumlich weit verteilt angeordnet sind.

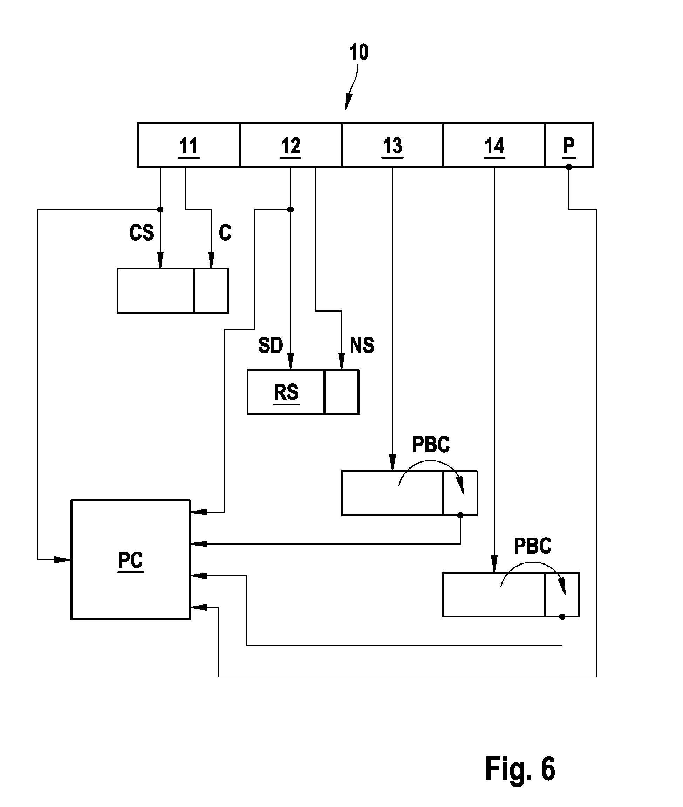

Die Figur 6 zeigt eine erfindungsgemäße Paritäts-Prüfung PC beim Dekodieren der Registerauswahl. Für den Fall, dass der Code der Kontroll-Signale in Figur 3 nicht aus den Kontroll-Signalen selbst, sondern aus dem Operations-Code mittels einer Code-Vorschrift wie z. B einer Tabelle gebildet wird, und ebenso mit dem NS-Signal in Figur 5 bei direkter Registeradressierung verfahren wird, ist die Durchgängigkeit gegeben. Ein Fehler kann dann bei der Dekodierung der betreffenden Signale durch den unabhängig voneinander gebildeten Code mittels eines Code-Prüfers erkannt werden.

Insgesamt ist damit das erfindungsgemäße Verfahren geeignet, eine einfache und durchgängige Überwachung der Befehlsworte in einer Pipeline einer Datenverarbeitungseinheit zu gewährleisten.

## Patentansprüche

1. Verfahren zum Überwachen der Gültigkeit von geschützten Befehlsworten in einer Datenverarbeitungseinheit, bei dem die Befehlsworte an eine Befehls-Pipeline dieser Einheit übermittelt und einzelne Bestandteile der Befehlsworte zu deren Verarbeitung in der Pipeline abgespalten werden, **dadurch gekennzeichnet, dass** abgespaltene Teile eines Befehlsworts durch einen jeweiligen Code geschützt werden, der zum Überprüfen der Gültigkeit des gesamten Befehlsworts herangezogen wird.

2. Verfahren nach Anspruch 1, bei dem die einzelnen, abgespaltenen Bestandteile eines Befehlsworts unabhängig voneinander kodiert werden.

3. Verfahren nach Anspruch 2, bei dem für die einzelnen, abgespaltenen Bestandteile eines Befehlsworts unterschiedliche Kodierungsmethoden verwendet werden.

4. Verfahren nach einem der vorstehenden Ansprüche, bei dem eine Kodierungsmethode das Bilden eines Paritäts-Codes, eines Modulo-Codes, und/oder eines Berger-Codes und/oder 1-aus-n-Codes umfasst.

5. Verfahren nach Anspruch 4, bei dem zum Überprüfen des Befehlsworts in seiner Gesamtheit die Bits der 1-aus-n-kodierten Bestandteile dazu herangezogen werden.

6. Verfahren nach Anspruch 4 oder 5, bei dem das Signal NO SELECT erzeugt wird, wenn beim Bilden des 1-aus-n-Codes keine gültige Registeradresse vorliegt.

7. Datenverarbeitungseinheit mit einer Befehls-Pipeline, an der Befehlsworte zu deren Verarbeitung gespeichert sind, wobei die Befehlsworte einzelne, abgespaltene Bestandteile umfassen, **dadurch gekennzeichnet, dass** die abgespaltenen Bestandteile eines Befehlsworts durch einen jeweiligen Code ergänzt sind, durch den dieser Bestandteil geschützt ist, und der zum Überprüfen der Gültigkeit des gesamten Befehlsworts herangezogen wird.

8. Datenverarbeitungseinheit nach Anspruch 7, bei der eine Leitungsführung der Bits von einzelnen, abgespaltenen Bestandteilen eines Befehlsworts so gestaltet ist, dass zeitlich vor dem Überprüfen des gesamten Befehlsworts ein Code-Generator angesprochen wird, und in der Weiterführung der Leitungen erst die Überprüfung des gesamten Befehlsworts erfolgt.
